(19)

Europäisches
Patentamt

European
Patent Office

Office européen
des brevets

(11) **EP 2 533 024 B1**

(12) **EUROPÄISCHE PATENTSCHRIFT**

(45) Veröffentlichungstag und Bekanntmachung des
Hinweises auf die Patenterteilung:
**19.03.2014 Patentblatt 2014/12**

(51) Int Cl.:
***G01G 23/01*** *(2006.01)*

(21) Anmeldenummer: **11169340.4**

(22) Anmeldetag: **09.06.2011**

(54) **Kraftübertragungsvorrichtung mit koppelbarem Kalibriergewicht**

Force transferring device with attachable calibration weight

Dispositif de transmission de force avec un poids de calibrage à coupler

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**12.12.2012 Patentblatt 2012/50**

(73) Patentinhaber: **Mettler-Toledo AG
8606 Greifensee (CH)**

(72) Erfinder:
• **Burkhard, Hans-Rudolf
8492 Wila (CH)**
• **Schneider, Ferdinand
8406 Winterthur (CH)**

(56) Entgegenhaltungen:
**DE-U1- 8 108 831    JP-A- 2002 277 316
US-A- 2 672 755**

EP 2 533 024 B1

**Beschreibung**

Die vorliegende Erfindung bezieht sich auf eine Kraftübertragungsvorrichtung für ein gravimetrisches Messinstrument, wobei die Kraftübertragungsvorrichtung einen Lastaufnahmebereich und einen feststehenden Bereich aufweist. Eine mit dem Lastaufnahmebereich verbundene Waagschale nimmt die zu wägende Last auf, deren auf die Waagschale wirkende Kraft direkt oder mittels eines kraftuntersetzenden Hebelwerks an einen Messaufnehmer übertragen wird. Eine Parallelogrammführung zur vertikalen Führung der Waagschale und des Lastaufnahmebereichs, die Kraftübertragungsvorrichtung und der Messaufnehmer bilden im Wesentlichen eine Wägezelle eines gravimetrischen Messinstruments.

Es sind im Stand der Technik verschiedene Funktionsprinzipien von Wägezellen bekannt, wie beispielsweise Wägezellen mit Dehnungsmessstreifen, Wägezellen mit Saiten- oder EMFC-Wägezellen (Electro Magnetic Force Compensation). Gravimetrische Messinstrumente mit Saiten- oder EMFC-Wägezellen liefern Messresultate mit einer sehr hohen Auflösung.

Bei EMFC-Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Saiten-Wägezellen entspricht der mechanische Aufbau weitgehend den EMFC-Wägezellen, mit dem Unterschied, dass anstelle eines elektromagnetischen Messwertaufnehmers ein Schwingsaiten-Messwertaufnehmer eingesetzt wird. Durch die Last wird eine schwingende Saite gespannt, deren Frequenzänderung wiederum ein Mass für die aufgelegte Last darstellt. Während zum Zeitpunkt der Messwerterfassung das mechanische System der EMFC-Wägezellen in der Gleichgewichtslage ähnlich einer mechanischen Balkenwaage mit Gegengewichten ist, weist der Lastaufnahmebereich einer Saiten-Wägezelle eine geringe vertikale Verschiebung zum feststehenden Bereich auf, da die Saite unter Last gespannt wird und sich leicht dehnt. Daher werden Saiten-Wägezellen auch als "wegarme Kraftmesszellen" bezeichnet.

Beide Wägezellentypen werden beispielsweise in Präzisionswaagen und Analysewaagen im Milligramm-Bereich oder in Mikrowaagen im Mikrogramm-Bereich eingesetzt und bedürfen einer periodischen Kalibrierung, damit sie den Herstellerangaben und den gesetzlichen Vorschriften entsprechend Messwerte innerhalb eines vorgeschriebenen Toleranzbereichs liefern. Mit diesen periodischen Kalibrierungen werden auf die Wägezelle einwirkende Einflüsse korrigiert, beispielsweise eine sich verändernde Umgebungstemperatur oder der sich verändernde Luftdruck.

Die Kalibrierung erfolgt durch periodisches Belasten des Lastaufnahmebereichs mit einem bekannten Gewicht. Aus der Differenz des vor Auslieferung der Wägezelle bei der Endkontrolle ermittelten Werts und dem aktuell gemessenen Wert kann ein Korrekturwert errechnet werden, mittels des die nachfolgenden Messresultate der Wägezelle korrigiert werden können. Um einen möglichst genauen Kalibrierwert zu erhalten, sollte das Kalibriergewicht der maximal zulässigen Last der Wägezelle entsprechen. Dies kann bedeuten, dass sehr grosse Kalibriergewichte erforderlich sind.

Im Stand der Technik sind verschiedene gravimetrische Messinstrumente bekannt, die ein integriertes Kalibriergewicht aufweisen.

Ein solches nach dem Prinzip der elektromagnetischen Kraftkompensation arbeitendes gravimetrisches Messinstrument mit eingebautem, stabförmigem Kalibriergewicht wird in der EP 0 955 530 B1 offenbart. Das stabförmige Kalibriergewicht ist ausserhalb der Wägezelle angeordnet und wird auf einen mit dem Lastaufnahmebereich gekoppelten Kalibriergewichtsarm aufgelegt, welcher als Übersetzungshebel dient. Dank dieser Übersetzung können die Masse des Kalibriergewichts und damit seine Dimensionen klein gehalten werden. Da der Kalibriergewichtsarm stets mit dem Lastaufnahmebereich gekoppelt ist, dient er lediglich als Übersetzung und Aufnahme für das Kalibriergewicht während des Kalibriervorganges und ist nicht Teil des Kalibriergewichts selbst. Der Kalibriergewichtsarm ist folglich Teil einer Kraftübertragungsvorrichtung beziehungsweise eines Hebelwerks zur Übertragung und Untersetzung der Last auf den Messaufnehmer und ist auch während des Wägebetriebs mit dem Lastaufnahmebereich der Wägezelle verbunden.

Wie in der CH 661 121 A5 offenbart, kann die Kraftübertragungsvorrichtung auch ein mehrstufiges Hebelwerk aufweisen, wobei die einzelnen Hebel mittels Koppelelementen in geeigneter Weise miteinander verbunden sind, so dass zwischen dem Lastaufnahmebereich und dem Messaufnehmer eine Kraftuntersetzung erreicht wird. An einem der Koppelelemente sind geeignete Aufnahmen zum Auflegen eines Kalibriergewichts ausgebildet.

Die JP 3761792 B2 offenbart eine mit Dehnmessstreifen bestückte Wägezelle, die ein Kalibriergewicht mit einem Übersetzungshebel aufweist. Zwischen dem Übersetzungshebel und dem Lastaufnahmebereich ist ein Koppelelement angeordnet. Durch Anheben des Kalibriergewichts und des Koppelelements wird eine am Koppelelement ausgebildete Lagerpfanne von einem am Lastaufnahmebereich angeordneten Schneidlager abgehoben und dadurch der Übersetzungshebel vom Lastaufnahmebereich entkoppelt.

Weitere Lösungen aus dem Stand der Technik sind in DE 8 108 831 U1, US 2 672 755 A und JP 2002 277 316 A offenbart.

Alle vorangehend dargestellten Lösungen des Standes der Technik verfügen über eine Kalibriergewichts-Auflegevorrichtung wie sie dem Fachmann bekannt sind.

Die präzise Ermittlung des Korrekturwertes hängt nicht nur vom Auflösungsvermögen des Messaufnehmers ab, sondern auch wesentlich von der präzisen Einhaltung der geometrischen Verhältnisse. Bereits kleinste Abweichungen des aufgelegten Kalibriergewichts von dessen Sollposition auf z. B dem in der EP 0 955 530 B1 beschriebenen Kalibriergewichtsarm, dem in der CH 661 121 A5 beschriebenen Koppelglied oder geringste Verschiebungen der Lage der Pfanne zum Schneidlager in der JP3761792 B2 führen zu einer Verlängerung oder Verkürzung des wirksamen Hebelarms und damit zu einem fehlerbehafteten Korrekturwert. Infolge dessen werden die Berührungsstellen zwischen Kalibriergewicht und Kalibriergewichtsarm oder Schneidlager und Pfanne mit grösster Präzision und mit hoher Kostenfolge gefertigt.

Die Aufgabe der vorliegenden Erfindung besteht in der Schaffung einer Kraftübertragungsvorrichtung für ein gravimetrisches Messinstrument mit einem Messaufnehmer, mit welcher ein Kalibriergewicht derart in Anlage bringbar ist, dass der Einfluss sich ändernder geometrischer Verhältnisse auf die am Messaufnehmer wirkende Kalibriergewichtskraft minimiert wird.

Diese Aufgabe wird durch die erfindungsgemässe Kraftübertragungsvorrichtung mit einem Kalibriergewichtshebel sowie durch ein gravimetrisches Messinstrument mit der erfindungsgemässen Kraftübertragungsvorrichtung gelöst.

Eine Kraftübertragungsvorrichtung eines gravimetrischen Messinstruments weist einen feststehenden Bereich und einen Lastaufnahmebereich auf. Der Lastaufnahmebereich ist direkt oder durch mindestens ein Koppelelement und mindestens einen Hebel kraftübertragend mit einem am feststehenden Bereich angeordneten Messaufnehmer verbunden. Ferner weist die erfindungsgemässe Kraftübertragungsvorrichtung ein Koppelmittel und einen Kalibrierungshebel mit einer Gelenkstelle auf. Der Kalibrierungshebel beinhaltet einen ersten und einen zweiten Kalibrierungshebelarm, wobei das Koppelmittel zwischen dem Kalibrierungshebel und dem mindestens einen Hebel angeordnet ist. Das Koppelmittel ist in ein erstes und zweites Teilkoppelmittel zweigeteilt, welche derart zueinander ausgerichtet sind, dass zwischen ihnen nur eine Druck- oder Zugkraft übertragbar ist. Die Gelenkstelle des Kalibrierhebels ist am Lastaufnahmebereich abgestützt.

Die zweigeteilte Ausgestaltung des Koppelmittels ermöglicht es, den Kalibrierungshebel und das mit diesem fest verbundene Kalibriergewicht mit dem Lastaufnahmebereich kraftübertragend zu koppeln oder vollständig zu entkoppeln. Das Koppelmittel dient insbesondere zur Übertragung der Kalibriergewichtskraft durch Zug oder Druck. Bei Belastungen in der Gegenrichtung lösen sich die beiden Teilkoppelmittel voneinander, wodurch keine Kraftübertragung mehr zwischen diesen möglich ist. Je nach konkreter Ausgestaltung der beiden Teilkoppelmittel kann dieses Lösen auch nur für eine bestimmte Verschiebestrecke des einen Teilkoppelmittels relativ zum anderen Teilkoppelmittel gelten, wobei im Sinne der Erfindung nur diese bestimmte Verschiebestrecke zu betrachten ist. Im entkoppelten Zustand berühren sich die beiden Teilkoppelmittel nicht und somit kann keine Kraft zwischen den beiden Teilkoppelmitteln übertragen werden.

Die Anordnung der Gelenkstelle des Kalibrierungshebels am Lastaufnahmebereich ist vorteilhaft für eine kompakte Bauweise der Kraftübertragungsvorrichtung.

Bei Wägezellen mit elektromagnetischer Kraftkompensation erfolgt die Erfassung der Messwerte im ausbalancierten Zustand, womit die Biegemomente in den Lagerstellen der Kraftübertragungsvorrichtung annähernd Null sind. Der Kalibrierhebel beziehungsweise dessen Gelenkstelle ist vorzugsweise entsprechend ausgestaltet, so dass während des Kalibrierungsvorganges das Schwenklager biegemomentfrei ist.

In einem Ausführungsbeispiel ist das Koppelmittel als parallelgeführtes Koppelmittel ausgestaltet, dessen erstes Teilkoppelmittel ein erstes und ein zweites Parallelelement umfasst, welche parallel zueinander angeordnet sind und über die das erste, parallelgeführte Teilkoppelmittel entweder am Kalibrierungshebel oder am Lastaufnahmebereich festgelegt ist, so dass bei der Kraftübertragung durch das parallelgeführte Koppelmittel auftretende relative Querbewegungen durch das erste und zweite Parallelelement ausgeglichen werden. Verschiedene Ausführungen eines parallelgeführten Koppelmittels werden beispielsweise in der Europäischen Patentanmeldung EP101799300.8, veröffentlicht als EP 2 434 264 A1, beschrieben, auf welche hier durch Bezugnahme verwiesen wird.

Das Kalibriergewicht kann somit mittels des parallelgeführten Koppelmittels in die Kraftübertragungsvorrichtung eingeköppelt werden, so dass diese kalibriert werden kann. Bei der Einkopplung des Kalibriergewichts können aufgrund unterschiedlicher Schwenkradien zwischen dem Ankopplungspunkt des Kalibriergewichts und dem Abstand zu den nächsten Lagerstellen Querverschiebungen auftreten, welche insbesondere durch das parallelgeführte Koppelmittel und genauer das parallelgeführte Teilkoppelmittel ausgeglichen werden können.

Das parallelgeführte Koppelmittel ist dabei so ausgestaltet, dass zwischen dem festen und dem parallelgeführten Teilkoppelmittel nur Druck- oder Zugkräfte in Richtung der Mittelängsachse des parallelgeführten Koppelmittels übertragen werden können.

Zudem sind die beiden Parallelelemente des parallelgeführten Teilkoppelmittels derart ausgestaltet, dass sie einerseits möglichst flexibel und dadurch bei deren Auslenkung geringe Biegemomente verursachend und andererseits stabil genug ausgestaltet sind, dass ihre Labilität nicht dazu führt, dass die Teilkoppelmittel infolge der Schwerkraft oder durch Trägheits- und Beschleunigungskräfte während des Betriebs der Kraftübertragungsvorrichtung auslenken. Die beiden Parallelelemente sind parallel zueinander und zur Richtung der durch das parallelgeführte Koppelmittel übertragbaren Kraft ausgerichtet. Die beiden Parallelelemente dienen dazu, auch geringe relative Querverschiebungen bei der Einkopplung des Kalibriergewichts auszugleichen, welche bei der Kraftübertragung beziehungsweise der Ermittlung des Kalibriermesswerts auftreten können.

Näherungsweise gelten die vorangehenden Ausführungen auch für Saiten-Wägezellen, da bei Belastung des Lastaufnahmebereichs nur eine geringe Streckung der Saite und daher nur geringe Biegemomente in den Lagerstellen der Kraftübertragungsvorrichtung vorhanden sind. Weiterhin können derartige Koppelmittel in DMS Wägezellen eingesetzt werden.

In einem weiteren Ausführungsbeispiel ist das Koppelmittel als unidirektionales Koppelmittel ausgestaltet, welches ebenfalls in ein erstes und ein zweites Teilkoppelmittel zweigeteilt ist. Das erste Teilkoppelmittel weist ein erstes Dünnstellenbiegelager und das zweite Teilkoppelmittel ein zweites Dünnstellenbiegelager auf, über welche die Teilkoppelmittel am Lastaufnahmebereich oder am Kalibrierungshebel festgelegt sind. Die Dünnstellenbiegelager der beiden Teilkoppelmittel sind derart ausgestaltet, dass sie möglichst flexibel und dadurch bei deren Auslenkung geringe Biegemomente verursachend ausgestaltet sind, aber dennoch gattungsgemäss Zug oder Druckkräfte in Richtung ihrer Mittellängsachse übertragen können. Ferner darf die Labilität auf Biegung der Dünstellenbiegelager nicht dazu führen, dass die Teilkoppelmittel infolge der Schwerkraft oder durch Trägheits- und Beschleunigungskräfte während des Betriebes der Kraftübertragungsvorrichtung auslenken. Die Teilkoppelmittel sind derart zueinander ausgerichtet, dass infolge der Zweiteilung des unidirektionalen Koppelmittels vom zweiten Dünnstellenbiegelager zum ersten Dünnstellenbiegelager nur eine Zugkraft oder nur eine Druckkraft übertragbar ist.

Vorzugsweise fallen die Mittellängsachsen des ersten und des zweiten Dünnstellenbiegelagers zusammen, so dass innerhalb des unidirektionalen Koppelmittels keine Kippmomente entstehen. Geringfügiger paralleler Versatz der beiden Mittellängsachsen kann aber zugelassen werden, wenn die Ausgestaltung der mindestens einen Berührungsstelle zwischen dem ersten und dem zweiten Teilkoppelmittel eine innere Stabilität gegen Auslenken der beiden Teilkoppelmittel zueinander aufweist. Die Stabilität ist bei der Übertragung von Zugkräften naturgemäss gegeben, während zur Übertragung von Druckkräften nur bestimmte Ausgestaltungen dem unidirektionalen Koppelmittel eine innere Stabilität verleihen. Verschiedene Ausführungen eines unidirektionalen Koppelmittels werden beispielsweise in der EP 09180142.3, veröffentlicht als EP 2 336 736 A1, beschrieben.

Die Kraftübertragung erfolgt hier somit nicht wie im Stand der Technik über die Auflagestellen des Kalibriergewichts, sondern über das Koppelmittel. Bei einem parallelgeführten Koppelmittel über die Parallelelemente und bei einem unidirektionalen Koppelmittel über die Dünnstellenbiegelager. Demzufolge bleiben die geometrischen Verhältnisse stets gleich, da kleinste Verschiebungen zwischen dem ersten und dem zweiten Teilkoppelmittel ausgeglichen werden und nicht in den eigentlichen Krafteinleitungspunkten erfolgen, welche durch die unveränderbare Lage der Parallelelemente oder der Dünnstellenbiegelager definiert sind.

In einer Ausführung weisen das erste Teilkoppelmittel und das zweite Teilkoppelmittel zur Übertragung von Druckkräften jeweils mindestens eine Berührungsstelle auf, die gegeneinander ausgerichtet sind. Die Berührungsstellen zur Kraftübertragung können so ausgebildet sein, dass das erste und das zweite Teilkoppelmittel beim Kalibriervorgang zueinander zentriert werden.

Zur Übertragung von Zugkräften kann eines der beiden Teilkoppelmittel ein erstes Zugelement, z.B. mit einem Vorsprung, aufweisen und das andere Teilkoppelmittel ein zweites Zugelement, z.B. mit einer Pfanne, aufweisen, wobei das erste Zugelement und das zweite Zugelement ineinander greifen, der Vorsprung zur Pfanne ausgerichtet ist und bei Übertragung von Zugkräften der Vorsprung mit der Pfanne in Anlage ist.

Die Kraftübertragungsvorrichtung kann auch eine Parallelführung beinhalten, so dass in deren Betriebsstellung der Lastaufnahmebereich mittels mindestens eines oberen Parallellenkers und mittels mindestens eines unteren Parallellenkers am feststehenden Bereich in vertikaler Richtung geführt ist.

Das Kalibriergewicht kann an eine Kalibriergewichts-Auflegevorrichtung mit einem Antrieb angekoppelt sein, welche das Ein- und Auskoppeln des Kalibriergewichts in das Hebelwerk der Kraftübertragungsvorrichtung bewirkt, indem das Kalibriergewicht angehoben oder abgesenkt wird.

In einer Ausführung ist die Kalibriergewichts-Auflegevorrichtung am Lastaufnahmebereich angeordnet, was vorteilhaft für eine kompakte Bauweise der Kraftübertragungsvorrichtung ist.

Die Stromversorgung der Kalibriergewichts-Auflegevorrichtung kann beispielsweise über die Parallelführung der Kraftübertragungsvorrichtung erfolgen. Weiterhin ist auch die Übertragung von elektrischen Signalen über die Parallelführung der Kraftübertragungsvorrichtung zur Kalibriergewichts-Auflegevorrichtung möglich, so dass beispielsweise auch Steuerbefehle übertragen werden können oder Daten der Kalibriergewichts-Auflegevorrichtung ausgelesen werden können. Dieses ist insbesondere in Kombination mit der Anordnung der Kalibriergewichts-Auflegevorrichtung am Lastaufnahmebereich vorteilhaft, da so der Antrieb besonders gut abgeschirmt wird.

Die Übertragung von Strom und/oder elektrischen Signalen vom feststehenden Bereich auf den Lastaufnahmebereich kann auch mit dünnen Drähten realisiert werden, die Drähte sollten sehr dünn sein, damit diese die Funktion der Kraftübertragungsvorrichtung nicht behindern.

Der Antrieb der Kalibriergewichts-Auflegevorrichtung kann beispielsweise als selbsthemmender Excenter ausgestaltet ist. Weitere Ausgestaltungen der Kalibriergewichts-Auflegevorrichtung umfassen die Ankopplung eines in Bezug auf die Kraftübertragungsvorrichtung externen Antriebs, welcher nur zum Ein- und Auskoppeln des Kalibriergewichts angekoppelt wird.

Die Kraftübertragungsvorrichtung kann aus verschiedenen Einzelteilen bestehen, welche mittels Verbindungselementen zu einer Einheit zusammengefügt sind. Mehrere dieser Teile können aber auch stoffschlüssig miteinander verbunden sein. Vorzugsweise sind mindestens der Lastaufnahmebereich, der feststehende Bereich, der Kalibrierungshebel und das Koppelmittel monolithisch miteinander verbunden.

Wie bereits weiter oben erwähnt, kann die erfindungsgemässe Kraftübertragungsvorrichtung zusammen mit einem Messaufnehmer und einem Kalibriergewicht als Wägezelle in einem gravimetrischen Messinstrument eingesetzt werden. Ein gravimetrisches Messinstrument wird üblicherweise derart kalibriert, dass die Gewichtskraft des Kalibriergewichts durch die Kraftübertragungsvorrichtung in derselben Richtung wie eine auf den Lastaufnahmebereich wirkende Kraft auf den Messaufnehmer übertragbar ist. Folglich wird der Messaufnehmer in gleicher Weise mit einer Kalibrierkraft belastet wie im normalen Betrieb mit einer zu wiegenden Last. Bei Saiten-Wägezellen kann der Messaufnehmer meistens nur in der Lastrichtung belastet werden, weshalb die vorangehend beschriebene Ausführung für Saiten- und für EMFC-Wägezellen geeignet ist.

In einer weiteren Ausführungsform kann das Kalibriergewicht zwischen der Gelenkstelle und dem Koppelmittel angeordnet sein, so dass die Gewichtskraft des Kalibriergewichts durch die Kraftübertragungsvorrichtung in der entgegengesetzten Richtung wie eine auf den Lastaufnahmebereich wirkende Kraft auf den Messaufnehmer übertragbar ist. Diese Ausführung ist insbesondere für EMFC-Wägezellen geeignet, die über einen Messaufnehmer mit Push-Pull System verfügen, welches in der US 20080218303 A1 ausführlich beschrieben ist. Aufgrund dieser Ausgestaltung kann das Kalibriergewicht als Kompensationsgewicht eingesetzt werden, um den Lastbereich der Wägezelle zu vergrössern oder eine auf den Lastaufnehmer wirkende Vorlast zu kompensieren. Eine derart ausgebildete Wägezelle könnte bei entkoppeltem Kalibriergewicht beispielsweise Lasten im Bereich von 0-100 Gramm wiegen und mit eingekoppeltem Kalibriergewicht den Wägebereich erweitern und Lasten im Bereich von 100-200 Gramm wiegen, da die Gewichtskraft des Kalibriergewichts der auf den Lastaufnahmebereich wirkenden Last entgegenwirkt.

Üblicherweise ist das Kalibriergewicht aus einem korrosionsbeständigen Material mit einheitlicher Dichte $\rho = 8.0$ kg / dm$^3$ gefertigt. Das Kalibriergewicht kann aber auch teilweise aus demselben Material wie die Kraftübertragungsvorrichtung gefertigt sein und mit einer Ergänzungsmasse höherer Dichte versehen sein. Um die Genauigkeit des Kalibrierwerts zu erhöhen, kann ferner ein Drucksensor zur Erfassung des Umgebungsdrucks des gravimetrischen Messinstruments vorhanden sein. Dessen Messwert kann zur Korrektur des Auftriebs des Kalibriergewichts herangezogen werden, da die Auftriebskraft der vom Kalibriergewicht verdrängten Luft der Gewichtskraft des Kalibriergewichts entgegenwirkt.

Verschiedene Ausführungsvarianten der erfindungsgemässen Kraftübertragungsvorrichtung und deren Verwendung in einem gravimetrischen Messinstrument werden anhand der folgenden Figuren näher beschrieben, wobei gleiche Elemente mit denselben Bezugszeichen versehen sind. Es zeigen:

Figur 1  eine schematische Darstellung einer Wägezelle mit einer Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem parallelgeführten Koppelmittel zwischen dem Hebelwerk und dem Kalibrierungshebel, welches nur Druckkräfte übertragen kann, wobei der Kalibrierungshebel am Lastaufnahmebereich angelegt ist;

Figur 2  eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem unidirektionalen Koppelmittel zwischen dem Hebelwerk und dem Kalibrierungshebel, welches nur Zugkräfte übertragen kann;

Figur 3  eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk mit zwei Hebeln zur Untersetzung der auf den Lastaufnahmebereich wirkenden Kraft aufweist und mit einem unidirektionalen Koppelmittel zwischen einem zweiten Koppelelement der beiden Hebel und dem Kalibrierungshebel, welches nur Druckkräfte übertragen kann;

Figur 4  eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk mit zwei Hebeln zur Untersetzung der auf den Lastaufnahmebereich wirkenden Kraft aufweist und mit einem parallelgeführten Koppelmittel zwischen einem zweiten Koppelelement der beiden Hebel und dem Kalibrierungshebel, welches nur Zugkräfte übertragen kann;

Figur 5    eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk mit drei Hebeln zur Untersetzung der auf den Lastaufnahmebereich wirkenden Kraft aufweist und mit einem parallelgeführten Koppelmittel zwischen dem Hebelwerk und dem Kalibrierungshebel, welches nur Zugkräfte übertragen kann;

Figur 6    eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem unidrektionalen Koppelmittel zwischen dem Hebelwerk und dem Kalibrierungshebel, welches nur Zugkräfte übertragen kann, wobei der Kalibrierungshebel direkt am Lastaufnahmebereich angelegt ist;

Figur 7    eine Ausgestaltung eines unidirektionalen Koppelmittels, mit welchem nur eine Zugkraft übertragbar ist;

Figur 8    eine Ausgestaltung eines unidirektionalen Koppelmittels, mit welchem nur eine Druckkraft übertragbar ist;

Figur 9    eine Ausgestaltung eines parallelgeführten Koppelmittels, mit welchem nur eine Zugkraft übertragbar ist;

Figur 10    eine weitere Ausgestaltung eines parallelgeführten Koppelmittels, mit welchem nur eine Druckkraft übertragbar ist;

Figur 11    eine Ausgestaltung eines parallelgeführten Koppelmittels, mit welchem nur eine Zugkraft übertragbar ist;

Figur 12    eine Ausgestaltung eines parallelgeführten Koppelmittels, mit welchem nur eine Druckkraft übertragbar ist.

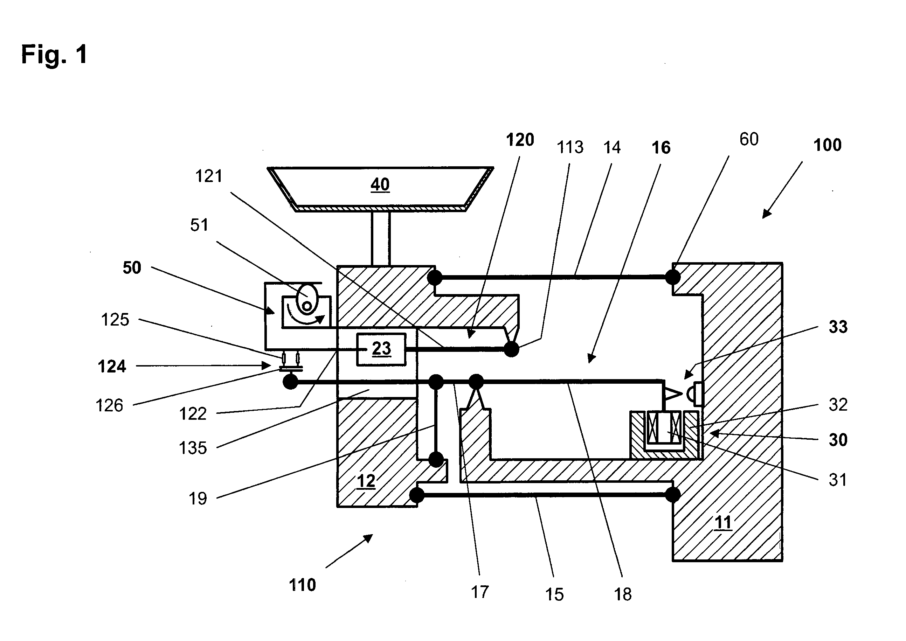

Die Figur 1 zeigt in der Aufsicht eine schematische Darstellung einer Wägezelle 100 mit einer Ausführung der Kraftübertragungsvorrichtung 110. Die Kraftübertragungsvorrichtung 110 weist einen feststehenden Bereich 11 und einen Lastaufnahmebereich 12 auf. Der Lastaufnahmebereich 12 ist mittels eines ersten Parallellenkers 14 und mittels eines zweiten Parallellenkers 15 am feststehenden Bereich 11 parallel geführt. Ein Kalibrierhebel 120 ist über eine Gelenkstelle 113 am Lastaufnahmebereich 12 abgestützt. Die Gelenkstelle 113 sowie alle Lagerstellen der Kraftübertragungsvorrichtung 110 sind als dicke Punkte dargestellt und können jede, im Stand der Technik bekannte Ausgestaltung aufweisen. Üblicherweise werden diese Lagerstellen als Dünnstellenbiegelager ausgestaltet.

Mit dem Lastaufnahmebereich 12 ist ein als Waagschale ausgebildeter Lastaufnehmer 40 verbunden. Ferner ist am feststehenden Bereich 11 ein Messaufnehmer 30 festgelegt, durch welchen ein kraftabhängiges Wägesignal erzeugt werden kann. Der dargestellte Messaufnehmer 30 weist eine Spule 31 und ein Magnetsystem 32 mit einem Permanentmagneten sowie einen Positionsgeber 33 auf. Das Magnetsystem 32 ist mit dem feststehenden Bereich 11 fest verbunden und die zu messende Kraft greift an der Spule 31 an, welche berührungsfrei innerhalb des Magnetsystems 32 angeordnet ist. Durch die an der Spule 31 angreifende Kraft wird diese relativ zum Magnetsystem 32 verschoben und diese Verschiebung durch den Positionsgeber 33 detektiert. Das vom Positionsgeber 33 abgegebene Signal wird an eine nicht dargestellte Waagenelektronik weitergeleitet, welche einen die Spule 31 durchfliessenden Strom kontinuierlich regelt, um die ursprüngliche Position der Spule 31 zum Magnetsystem 32 trotz der einwirkenden Kraft wiederherzustellen. Der die Spule 31 durchfliessende Strom wird gemessen, diese Rohmesssignale in der Waagenelektronik zu einem Messwert verarbeitet und dieser Messwert an eine ebenfalls nicht dargestellte Anzeige weitergeleitet und dort zur Anzeige gebracht. Selbstverständlich können an Stelle des dargestellten Messaufnehmers 30 auch andere Messaufnehmer, beispielsweise Schwingsaiten, induktive und kapazitive Messaufnehmer, mit Dehnungsmessstreifen versehene Messaufnehmer und dergleichen mehr eingesetzt werden.

Da der dargestellte Messaufnehmer 30 nur eine begrenzte Kompensationskraft zur Kompensation der auf den Lastaufnahmebereich 14 wirkenden Kraft aufbringen kann, wird häufig ein einstufiges oder mehrstufiges Hebelwerk zur Untersetzung der zu messenden Kraft eingesetzt. Dieses ist zwischen dem Lastaufnahmebereich 12 und dem Messaufnehmer 30 kraftübertragend angeordnet. Das hier dargestellte Hebelwerk weist einen am feststehenden Bereich 11 schwenkbar gelagerten Hebel 16 auf, dessen kurzer Hebelarm 17 durch ein erstes Koppelelement 19 mit dem Lastaufnahmebereich 12 verbunden ist. Der lange Hebelarm 18 des Hebels 16 ist mit der Spule 31 verbunden.

Die Kraftübertragungsvorrichtung 110 weist zudem einen Kalibrierungshebel auf, welcher über eine Gelenkstelle 113 am Lastaufnahmebereich 12 schwenkbar gelagert ist und dessen erster Kalibrierungshebelarm 121 mit einem Kalibriergewicht 23 fest verbunden ist. Das Kalibriergewicht 23 ist hier in einem Durchbruch 135 des Lastaufnahmebereichs 12 angeordnet. Zur Übertragung der Gewichtskraft des Kalibriergewichts 23 dient in dieser Ausführung ein parallelgeführtes Koppelmittel 124, welches ein erstes, parallelgeführtes Teilkoppelmittel 125 und ein zweites, festes Teilkoppelmittel 126 aufweist. Das erste Teilkoppelmittel 125 ist mittels zweier Parallelelemente, welche hier Dünnstellenbiegelager umfassen, mit dem zweiten Kalibrierungshebelarm 122 und das feste Teilkoppelmittel 126 ist mit dem Hebelarm 17 verbunden, so dass das parallelgeführte Koppelmittel 124 zwischen dem Hebel 16 und dem zweiten Kalibrierungshebelarm 122 angeordnet ist.

Wie in Figur 1 dargestellt, ist am Lastaufnahmebereich 12 eine Kalibriergewichts-Auflegevorrichtung 50 festgelegt die, je nach Stellung ihrer Kurvenscheibe 51 das Kalibriergewicht 23 am Lastaufnahmebereich 12 abstützt oder freigibt. Die hier gezeigte Kalibriergewichts-Auflegevorrichtung umfasst vorzugsweise einen selbsthemmenden Exzenter, wie es hier durch die Kurvenscheibe 51 angedeutet wird. Im abgestützten Zustand sind das erste, parallelgeführte Teilkoppelmittel 125 und das zweite, feste Teilkoppelmittel 126 voneinander getrennt und im freigegebenen Zustand sind die beiden Teilkoppelmittel 125, 126 miteinander in Anlage, wodurch die Gewichtskraft des Kalibriergewichts 23 über die Hebelarme 17, 18 auf die Spule 31 des Messaufnehmers 30 übertragen wird. Die Kalibriergewichts-Auflegevorrichtung 50 ist hier in Figur 1 aussen am Lastaufnahmebereich 12 angeordnet, was einerseits eine sehr gute magnetische Abschirmung bedingt, anderseits die flexiblere Ausgestaltung der Kalibriergewichts-Auflegevorrichtung 50 ermöglicht, da diese beispielsweise als Exzenter mit einer Kurvenscheibe 50 ausgestaltet sein kann oder auch durch eine geeignete Kopplung bei Bedarf mit dem Kalibriergewicht 23 verbunden werden kann, so dass die Kalibriergewichts-Auflegevorrichtung 50, wie in Figur 1 gezeigt, im Wesentlichen ausserhalb der Wägezelle 100, insbesondere der Kraftübertragungsvorrichtung 110 angeordnet sein kann.

Aus der schematischen Darstellung ist klar ersichtlich, dass mit dem gezeigten parallelgeführten Koppelmittel 124 nur Druckkräfte übertragen werden können, da bei freigegebenem Kalibriergewicht 23 das zweite, feste Teilkoppelmittel 126 gegen das erste, parallelgeführte Teilkoppelmittel 125 gedrückt wird und gegen die vom Messaufnehmer 30 erzeugte Reaktionskraft wirkt.

Das parallelgeführte Koppelmittel 124 dient dazu Querkräfte auszugleichen, welche bei einer Auslenkung der Teilkoppelmittel ohne Parallelführung auftreten würden, da es dann aufgrund einer horizontalen Verschiebung zu einer gegenseitigen Verspannung der Lagerstellen wegen unterschiedlicher Schwenkradien kommen kann. Diese Querkräfte werden durch das parallelgeführte Koppelmittel 124 und insbesondere durch das parallelgeführte Teilkoppelmittel 125 ausgeglichen.

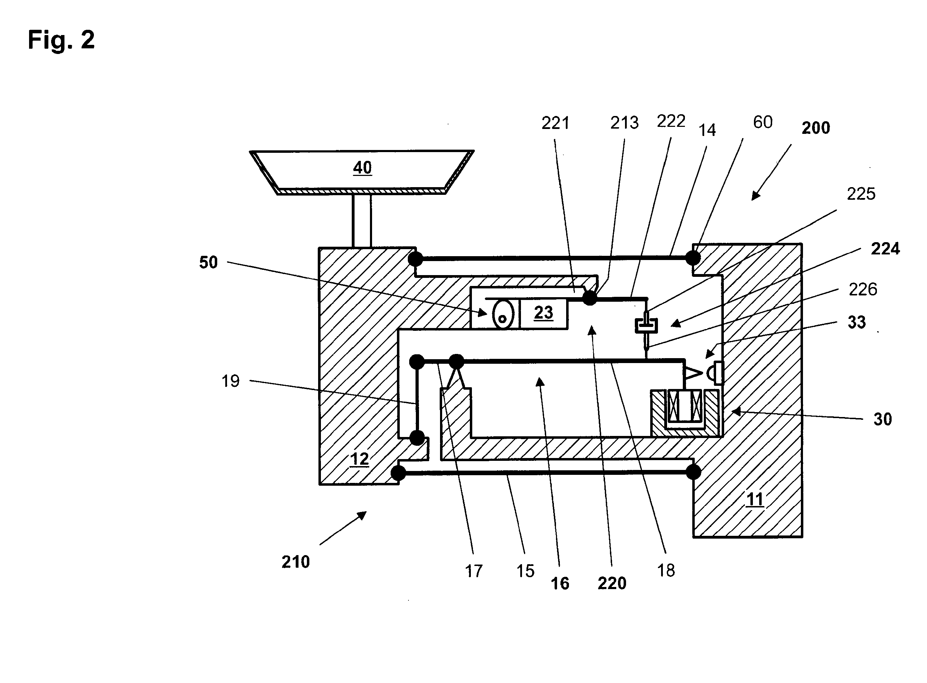

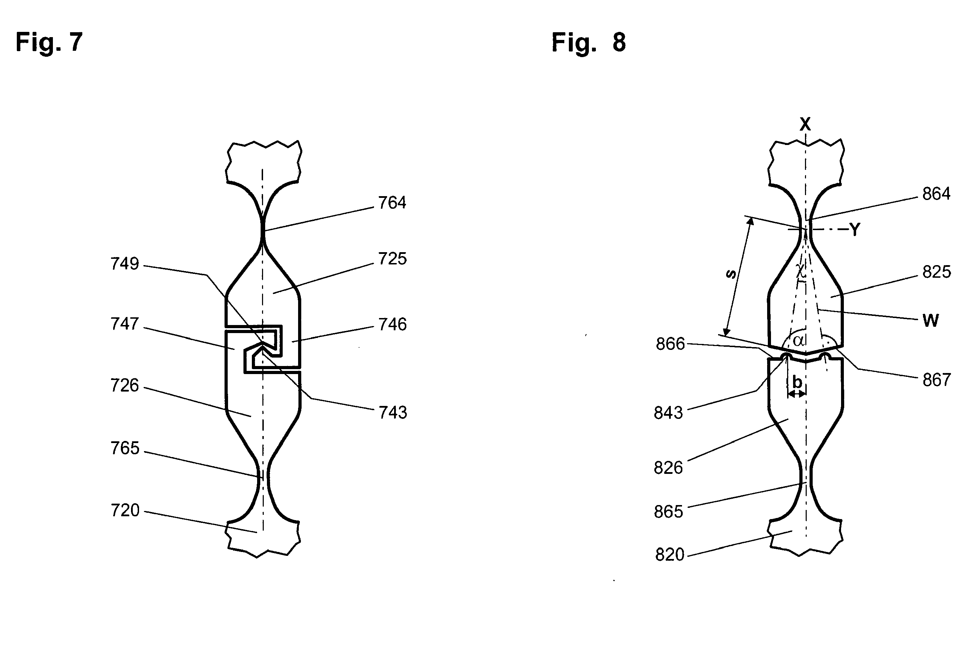

Figur 2 zeigt eine schematische Darstellung einer Wägezelle 200 mit einer weiteren Ausführung der Kraftübertragungsvorrichtung 210 in der Aufsicht. Ein in Figur 7 dargestelltes unidirektionales Koppelmittel 224 ist zur Zugkraftübertragung ausgestaltet, wobei das Kalibriergewicht 23 in diesem Ausführungsbeispiel über eine Gelenkstelle 213 am Lastaufnehmer 12 angelegt ist. Die Einkopplung des Kalibriergewichts 23, genauer dessen Bewegung kann wie hier dargestellt durch eine Kalibriergewichts-Auflegevorrichtung 50 mit einer Kurvenscheibe, wie bereits in Figur 1 gezeigt, oder beispielsweise durch einen von aussen ankoppelbaren Antrieb geschehen. Zur Stromversorgung der Kalibriergewichts-Auflegevorrichtung können Strom und/oder elektrische Signale, wie beispielsweise Steuersignale, über die Parallelführung 14, 15 der Kraftübertragungsvorrichtung 210 übertragen werden. Dazu können beispielsweise Leiterbahnen (hier nicht gezeigt) direkt auf den Parallellenkern 14, 15 so aufgebracht werden, dass die Funktionalität der Kraftübertragungsvorrichtung 210 nicht beeinflusst wird. Weiterhin kann die Strom und/oder Signalübertragung auch durch dünne Drähte erfolgen, welche zwischen dem Lastaufnahmebereich 12 und dem feststehenden Bereich 11 angeordnet sind.

Der dargestellte Kalibrierungshebel 220 weist einen ersten Kalibrierungshebelarm 221 und einen zweiten Kalibrierungshebelarm 222 auf, wobei sich hier der erste Kalibrierungshebelarm 221 vom Kalibriergewicht 23 bis zur Gelenkstelle 213 erstreckt und der zweite Kalibrierungshebelarm 222 sich zwischen der Gelenkstelle 213 und dem ersten Teilkoppelmittel 225 des unidirektionalen Koppelmittels 224 erstreckt.

Das unidirektionale Koppelmittel 224 weist ein erstes und ein zweites Teilkoppelmittel 225, 226 auf, die im unbelasteten Zustand berührungsfrei zueinander angeordnet sind. Sobald durch die Freigabe des Kalibriergewichts 23 eine Zugkraft zwischen den beiden Teilkoppelmitteln 225, 226 und damit auf den langen Hebelarm 18 des Hebels 16 übertragen werden soll, kommt das erste Teilkoppelmittel 225 nach kurzer relativer Verschiebung in Kontakt mit dem zweiten Teilkoppelmittel 226.

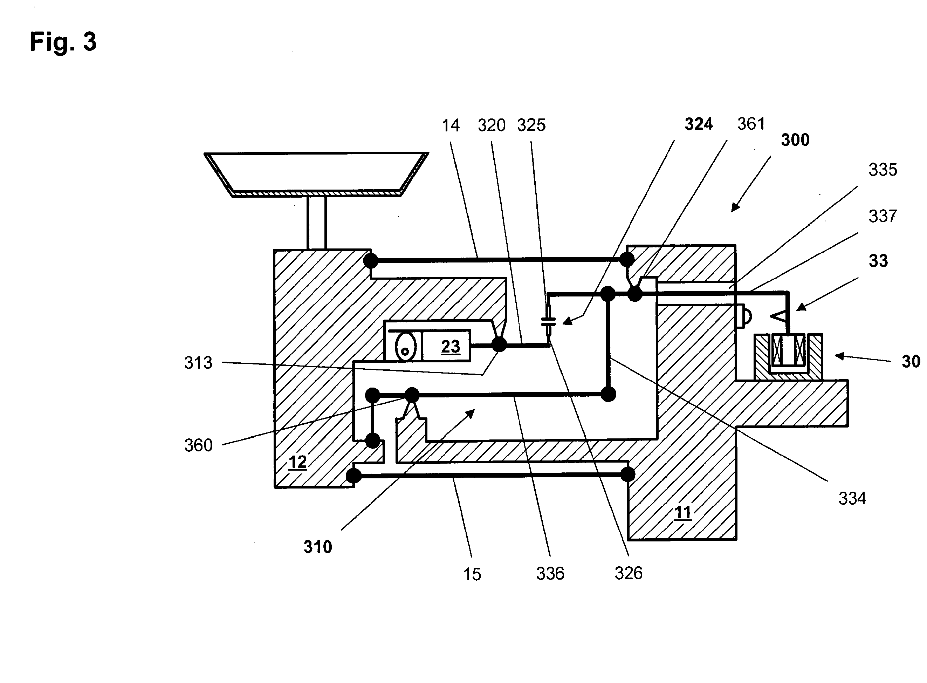

Figur 3 zeigt in schematischer Darstellung eine Wägezelle 300 mit einer weiteren Ausführung der Kraftübertragungsvorrichtung 310 in der Aufsicht, welche ein zwischen dem Lastaufnahmebereich 12 und dem Messaufnehmer 30 angeordnetes Hebelwerk mit zwei Hebeln 336, 337 zur Untersetzung der auf den Lastaufnahmebereich 12 wirkenden Kraft aufweist. Auch Figur 3 weist Bauteile auf, die einigen Bauteilen in den vorangehenden Figuren gleichen und deshalb dieselben Bezugszeichen aufweisen oder nicht nochmals beschrieben sind. Der erste Hebel 336 ist durch ein Koppelelement 334 kraftübertragend mit dem zweiten Hebel 337 verbunden. Zwischen dem Koppelelement 334 und einem am Lastaufnahmebereich 12 beweglich gelagerten Kalibrierungshebel 320 ist ein unidirektionales Koppelmittel 324 angeordnet, welches nur Druckkräfte übertragen kann. Das erste Teilkoppelmittel 325 des Koppelmittels 324 ist mit dem zweiten Hebel 335 verbunden und das zweite Teilkoppelmittel 326 ist mit dem Kalibrierungshebel 320 verbunden.

Um den Austausch des Messaufnehmers 30 zu erleichtern, weist der feststehende Bereich 11 einen Durchbruch 335 auf, durch welchen der zweite Hebel 337 hindurchreicht, so dass der Messaufnehmer 30 auf der den Parallellenkern 14, 15 abgewandten Seite des feststehenden Bereichs 11 angeordnet werden kann.

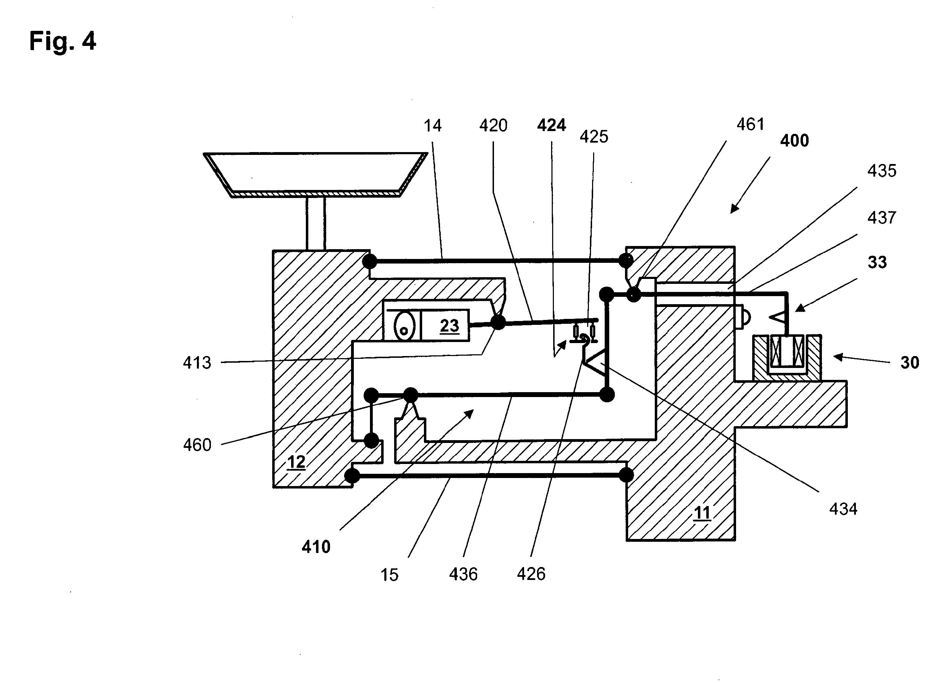

Figur 4 zeigt in schematischer Darstellung eine Wägezelle 400 mit einer weiteren Ausführung der Kraftübertragungsvorrichtung 410 in der Aufsicht, welche wie auch Figur 3 ein zwischen dem Lastaufnahmebereich 12 und dem Messaufnehmer 30 angeordnetes Hebelwerk mit zwei Hebeln 436, 437 zur Untersetzung der auf den Lastaufnahmebereich 12 wirkenden Kraft aufweist. Auch Figur 4 weist Bauteile auf, die einigen Bauteilen in den vorangehenden Figuren gleichen und deshalb dieselben Bezugszeichen aufweisen oder nicht beschrieben sind. Der erste Hebel 436 ist durch ein Koppelelement 434 kraftübertragend mit dem zweiten Hebel 437 verbunden. Zwischen dem Koppelelement 434 und einem am Lastaufnahmenbereich 12 beweglich gelagerten Kalibrierungshebel 420 ist ein parallelgeführtes Koppelmittel 424 angeordnet, welches nur Zugkräfte übertragen kann. Das feste Teilkoppelmittel 426 des parallelgeführten Koppelmittels 424 ist mit dem Koppelelement 434 verbunden und das parallelgeführte Teilkoppelmittel 425 ist mit dem Kalibrierungshebel 420 verbunden.

Das parallelgeführte Koppelmittel 424 weist ein parallelgeführtes Teilkoppelmittel 425 und ein festes Teilkoppelmittel 426 auf, die im unbelasteten Zustand berührungsfrei ineinander greifen. Sobald durch die Freigabe des Kalibriergewichts 23 eine Zugkraft vom festen Teilkoppelmittel 426 zum parallelgeführten Teilkoppelmittel 425 und damit auf den Hebel 436 übertragen werden soll, verhakt sich nach kurzer relativer Verschiebung der beiden entlang einer definierten Verschiebestrecke das feste Teilkoppelmittel 426 im parallelgeführten Teilkoppelmittel 425.

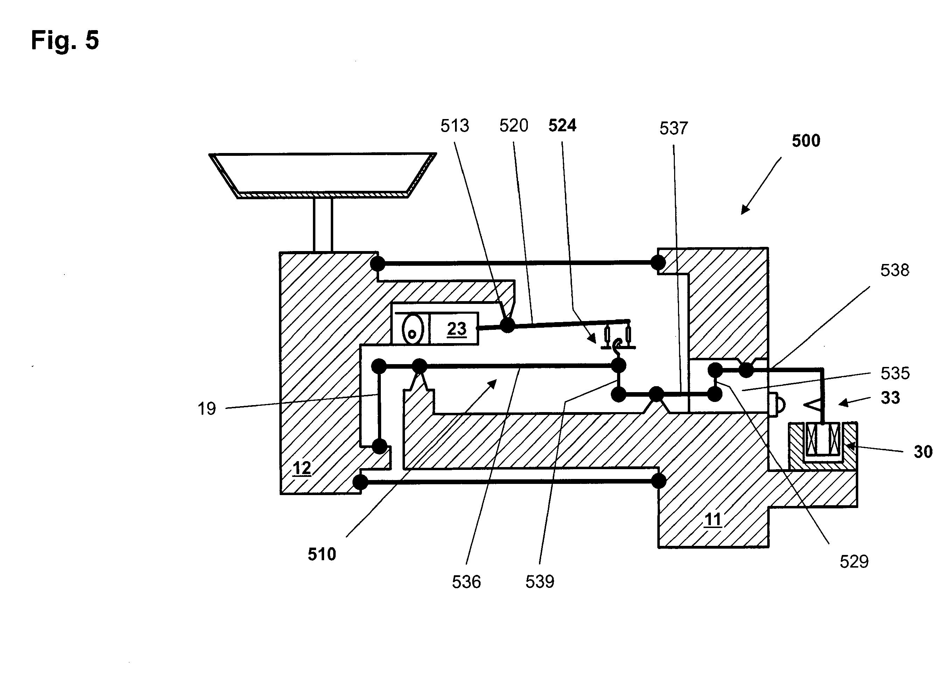

Die dargestellte Ausführung führt dazu, dass durch den Versatz der Kraftwirkungslinien des Koppelelements 434 und des seitlich damit verbundenen parallelgeführten Koppelmittels 424 ein Drehmoment erzeugt wird, welches die Lagerstellen 460, 461 der Hebel 436, 437 belastet. Vorzugsweise sind deshalb Lösungen anzustreben, bei denen die beiden Kraftwirkungslinien zusammenfallen, wie sie beispielsweise in Zusammenhang mit Figur 5 beschrieben werden. Weiterhin ist es möglich durch eine entsprechende Auswahl des Koppelmittels dieses Drehmoment zu kompensieren, wie es beispielsweise in Figur 3 gezeigt ist.

Bei der in Figur 4 gezeigte Ausführungsform wirkt die auf den Hebel 436 übertragene Zugkraft des Kalibriergewichts 23 wie eine zu messende Kraft einer auf den Lastaufnehmer 40 aufgelegten Last.

Figur 5 zeigt eine schematische Darstellung einer Wägezelle 500 mit einer weiteren Ausführung der Kraftübertragungsvorrichtung 510 in der Aufsicht. Diese weist ein zwischen dem Lastaufnahmebereich 12 und dem Messaufnehmer 30 angeordnetes Hebelwerk mit drei Hebeln 536, 537, 538 zur Untersetzung der auf den Lastaufnahmebereich 12 wirkenden Kraft auf. Wie bereits in den Figuren 3 und 4 dargestellt und oben beschrieben, sind der erste Hebel 536 mittels eines zweiten Koppelelements 539 mit dem zweiten Hebel 537 und der zweite Hebel 537 mittels eines dritten Koppelelements 529 mit dem dritten Hebel 538 kraftübertragend verbunden. Ein parallelgeführtes Koppelmittel 524, welches nur Zugkräfte übertragen kann, ist zwischen dem Hebelwerk und einem Kalibrierungshebel 520 angeordnet. Die Krafteinleitung erfolgt beim zweiten Koppelelement 539, welches den ersten Hebel 536 mit dem zweiten Hebel 537 verbindet, wobei das parallelgeführte Koppelmittel 524 nicht wie in Figur 4 parallel, sondern in Serie zum zweiten Koppelelement 539 angeordnet ist. Durch die serielle Anordnung wird vermieden, dass während des Kalibrierens ein Drehmoment auf das zweite Koppelelement 539 wirkt, wie dies bei dem in Figur 4 dargestellten Koppelelement 434 sein kann.

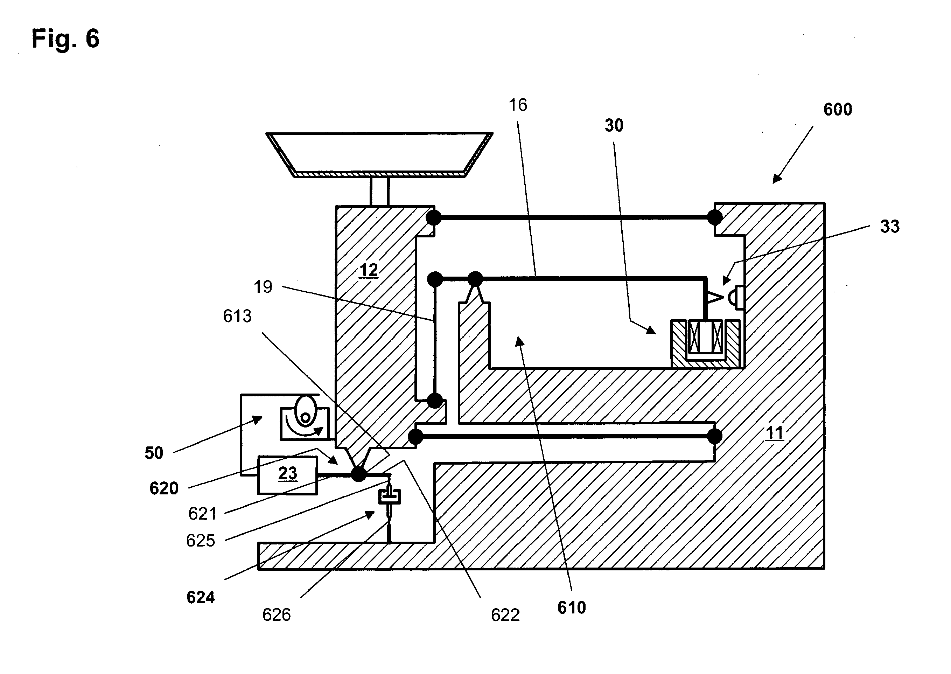

Selbstverständlich kann das Kalibriergewicht 23 auch direkter auf den Lastaufnahmebereich 12 einwirken, wie dies in der Figur 6 dargestellt ist. Diese zeigt eine Wägezelle 600 mit einer weiteren Ausführung der Kraftübertragungsvorrichtung 610 in der Aufsicht. Mit Ausnahme des Kalibrierungshebels 620 und des unidirektionalen Koppelmittels 624, gleichen dargestellte Elemente den Elementen von Figur 1 und werden nachfolgend nicht mehr beschrieben. Das Hebelwerk weist einen Hebel 16 auf, welcher zwischen dem Lastaufnahmebereich 12 und dem Messaufnehmer 30 angeordnet ist. Der Kalibrierungshebel 620 ist mit einem Kalibriergewicht 23 und über das unidirektionale Koppelmittel 624 mit dem feststehenden Bereich 11 gelenkig verbunden und bezogen auf die Gebrauchslage der Wägezelle 600 unterhalb des Lastaufnahmebereichs 12 angeordnet. Der Kalibrierungshebel 620 ist über eine Gelenkstelle 613 am Lastaufnahmebereich 12 abgestützt.

Die Kraftübertragung vom Kalibrierungshebel 620 zum Lastaufnahmebereich 12 erfolgt über das Zugkräfte übertragende unidirektionale Koppelmittel 624. Das erste Teilkoppelmittel 625 ist hier mit dem Kalibrierungshebel 620 verbunden und das zweite Teilkoppelmittel 626 mit dem Lastaufnahmebereich 12. Je kürzer der zweite Hebelarm 622 des Kalibrierungshebels 620 im Verhältnis zum ersten Kalibrierungshebelarm 621 gewählt ist, desto grösser ist die durch das unidirektionale Koppelmittel 624 übertragene Kalibrierkraft auf den Lastaufnahmebereich 12.

Selbstverständlich könnte das in Figur 6 gezeigte Ausführungsbeispiel auch in einem Direktmesssystem eingesetzt werden, wie es beispielsweise in der CH 593 481 A5 oder EP 1 726 926 A1 offenbart wird. In diesem Fall würde das Kalibriergewicht 23 über das Koppelmittel 624 direkt in das Messsystem eingekoppelt werden, wie es hier durch die Anordnung der Gelenkstelle 613 am Lastaufnahmebereich 12 angedeutet ist.

Die Figuren 7 bis 12 zeigen verschiedene Ausführungsformen eines Koppelmittels, welches wie in den Figuren 1 bis 6 gezeigt in einer Kraftübertragungsvorrichtung einer Wägezelle angeordnet werden kann. Das Koppelmittel kann als parallelgeführtes oder unidirektionales Koppelmittel sowie zur Zugkraft- oder Druckkraftübertragung ausgestaltet sein. Ein Koppelmittel weist ein erstes und zweites Teilkoppelmittel auf, welche zur Kraftübertragung miteinander in Kontakt gebracht werden können. Erfindungsgemäss ist das Koppelmittel zwischen dem Kalibrierhebel und dem Hebelwerk der Kraftübertragungsvorrichtung angeordnet.

Figur 7 zeigt eine Ausgestaltung eines unidirektionalen Koppelmittels in seiner Gebrauchslage, mit welchem nur eine Zugkraft übertragbar ist. Ein erstes Teilkoppelmittel 725 ist mittels eines ersten Dünnstellenbiegelagers 764 mit dem teilweise dargestellten Lastaufnahmebereich oder dem Hebelwerk einer Kraftübertragungsvorrichtung verbunden. Aufgrund der hängenden Lage des ersten Teilkoppelmittels 725 kann das erste Dünnstellenbiegelager 764 sehr schlank ausgestaltet werden. Ferner weist das erste Teilkoppelmittel 725 ein erstes Zugelement 746 auf.

Das zweite Teilkoppelmittel 726 ist durch ein zweites Dünnstellenbiegelager 765 mit dem teilweise dargestellten Kalibrierungshebel 720 verbunden. Das zweite Dünstellenbiegelager 765-welches in stehender Ausrichtung verbleibt, muss eine höhere Federkonstante aufweisen und dementsprechend massiver ausgestaltet sein, als das erste Dünstellenbiegelager 764. Bei ausreichender Abstimmung auf die Betriebsverhältnisse der Kraftübertragungsvorrichtung lenkt das zweite Teilkoppelmittel 726 infolge der Schwerkraft oder durch Trägheits- und Beschleunigungskräfte während des Betriebes nicht aus.

Das zweite Teilkoppelmittel 726 weist ein zweites Zugelement 747 auf. Sobald eine Kraft vom zweiten Dünnstellenbiegelager 765 zum ersten Dünnstellenbiegelager 764 übertragen werden soll, greift nach kleinem relativem Verschiebeweg voneinander das erste Zugelement 746 in das zweite Zugelement 747 ein. Zur noch sichereren Übertragung von Zugkräften kann das erste Zugelement 746 einen Vorsprung 743 und das zweite Zugelement 747 eine Pfanne 749 aufweisen. Sobald das erste Zugelement 746 und das zweite Zugelement 747 ineinander greifen, ist der Vorsprung 743 zur Pfanne 749 durch ihre Formgebung selbstzentrierend ausgerichtet und der Vorsprung 743 mit der Pfanne 749 in Anlage.

Figur 8 zeigt eine mögliche Ausgestaltung eines unidirektionalen Koppelelements in seiner Gebrauchslage, mit welchem nur eine Druckkraft übertragbar ist. Ein erstes Teilkoppelelement 825 ist mittels eines ersten Dünnstellenbiegelagers 864 mit dem teilweise dargestellten Lastaufnahmebereich oder dem Hebelwerk einer Kraftübertragungsvorrichtung verbunden.

Ein zweites Teilkoppelmittel 826 ist durch ein zweites Dünnstellenbiegelager 865 mit dem teilweise dargestellten Kalibrierungshebel 820 verbunden. Da beim Kalibriervorgang Druckkräfte übertragen werden und ein Ausknicken der beiden Teilkoppelmittel 825, 826 zueinander unter Last unbedingt zu vermeiden ist, muss das unidirektionale Koppelelement eine innere Stabilität aufweisen. Das zweite Teilkoppelmittel 826 weist eine gegen das erste Teilkoppelmittel 825 gerichtete Fläche 866 mit zwei aus der Fläche 866 ragenden Vorsprüngen 843 auf, welche in Bezug zur Mittellängsachse **X** des zweiten Dünnstellenbiegelagers 865 spiegelsymmetrisch angeordnet sind. Ferner weist das erste Teilkoppelmittel 825 zwei gegen das zweite Koppelelement 826 gerichtete Auflageflächen 867 auf, auf welchen je einer der beiden Vorsprünge 843 abstützen können. Durch diese Ausgestaltung sind in einer Ebene orthogonal zu den Mittellängsachsen **X** der beiden Dünnstellenbiegelager 864, 865 zwei Berührungsstellen vorhanden, welche dem unidirektionalen Koppelelement zur Übertragung einer Druckkraft eine innere Stabilität verleihen.

Wie in Figur 8 gezeigt, kann mittels dieser Ausgestaltung das erste Teilkoppelmittel 825 und das zweite Teilkoppelmittel 826 beim Kalibriervorgang zueinander ausgerichtet werden. Dadurch können Verschiebungen orthogonal zu den Mittellängsachsen **X** der Dünnstellenbiegelager 864, 865 verhindert werden. Zwecks der Ausrichtungsfunktion sind am ersten Teilkoppelmittel 825 die beiden Auflageflächen 867 in stumpfem Winkel zueinander geneigt ausgebildet. Jedoch sind der Neigung der Auflageflächen 867 aufgrund der notwendigen Forderung nach innerer Stabilität des unidirektionalen Koppelelements bestimmte Grenzen gesetzt.

Diese Grenzen richten sich nach den geometrischen Verhältnissen des unidirektionalen Koppelelements, wobei der jeweils zwischen einer Auflagefläche 867 und der Mittellängsachse **X** des Dünnstellenbiegelagers 864 eingeschlossene Winkel $\alpha$ zu betrachten ist. Dabei entspricht b dem rechtwinkligen Abstand einer Berührungsstelle beziehungsweise eines Vorsprungs 843 zur Mittellängsachse des Dünnstellenbiegelagers und s dem Abstand einer Berührungsstelle beziehungsweise Auflagefläche 867 zur Biegeachse Y des ersten Dünnstellenbiegelagers 864.

$$\chi = \arcsin(b/s)$$

$$\alpha = (90° - \chi) = \arccos(b/s)$$

Für den Winkel $\alpha$ gilt:

$$90° \geq \alpha \geq \text{arcos } (b/s)$$

Gemäss der vorangehend erläuterten Definition des Winkels $\alpha$ ist die innere Stabilität dann erreicht, wenn sich die Wirkungslinien W der durch die Berührungsstellen übertragenen Kräfte nicht innerhalb des ersten Teilkoppelmittels 825 schneiden. Der Grenzfall $\alpha$ = arcos (b/s) ist in Figur 8 dargestellt.

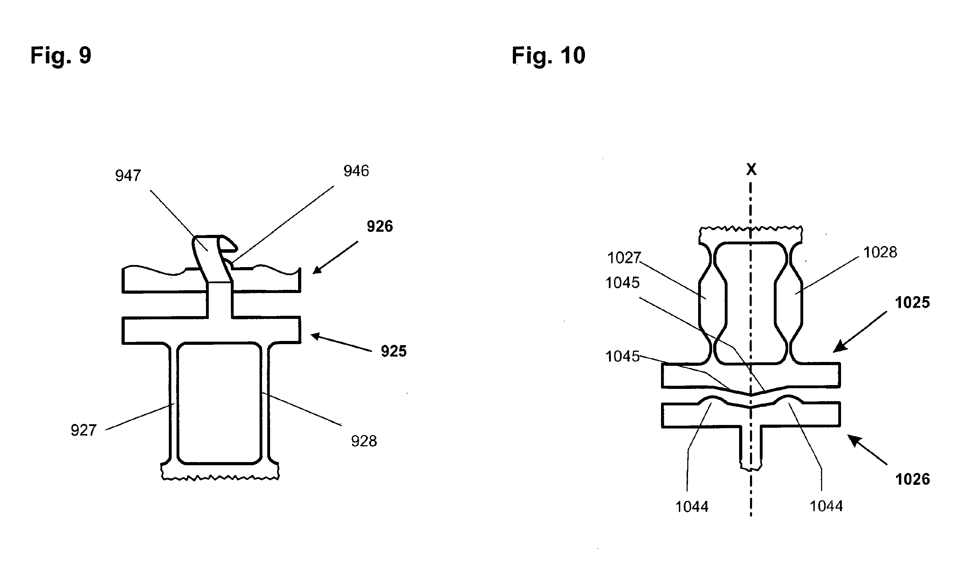

Figur 9 zeigt eine Ausgestaltung eines parallelgeführten Koppelmittels, bei welchem ein erstes, parallelgeführtes Teilkoppelmittel 925 ein zweites Zugelement 947 mit einer Pfanne und ein zweites, festes Teilkoppelmittel 926 ein erstes Zugelement 946 mit einem Vorsprung aufweist, welche zur Kraftübertragung ineinandergreifen können. Das parallelgeführte Teilkoppelmittel 925 weist hier zwei als Blattfedern ausgestaltete Parallelelemente 927, 928 auf.

Figur 10 zeigt eine mögliche Ausgestaltung eines parallelgeführten Koppelmittels, mit welchem nur eine Druckkraft übertragbar ist. Das parallelgeführte Koppelmittel weist ein zweites, festes Teilkoppelmittel 1026 und ein erstes, parallelgeführtes Teilkoppelmittel 1025 mit zwei, parallel zueinander angeordneten Parallelelementen 1027, 1028 auf. Die Parallelelemente 1027, 1028 sind hier als Lenker mit je zwei Dünnstellenbiegelager ausgestaltet, sie können jedoch auch als beliebige andere, dem Fachmann bekannte Parallelelemente ausgestaltet sein. Sie sind so ausgerichtet, dass sie bei einer Kraftübertragung durch das parallelgeführte Koppelmittel auftretende Querkräfte infolge der geometrischen Verhältnisse ausgleichen können.

Da beim Kalibriervorgang Druckkräfte übertragen werden und ein Ausknicken der beiden Teilkoppelmittel 1025, 1026 unter Last unbedingt zu vermeiden ist, muss das parallelgeführte Teilkoppelmittel 1025 eine innere Stabilität aufweisen. Das feste Teilkoppelmittel 1026 weist eine gegen das parallelgeführte Teilkoppelmittel 1025 gerichtete Fläche mit zwei daraus hervorragenden Vorsprüngen als erste Berührungsstelle 1044 auf, welche in Bezug zur Mittellängsachse zwischen den beiden Parallelelementen 1027, 1028 spiegelsymmetrisch angeordnet sind. Ferner weist das parallelgeführte Teilkoppelmittel 1025 zwei gegen das feste Teilkoppelmittel 1026 gerichtete zweite Berührungsstellen 1045 auf, auf welchen je eine der beiden Berührungsstellen 1044 abstützen kann. Durch diese Ausgestaltung sind in einer Ebene orthogonal zu den Mittellängsachsen **X** der beiden Parallelelemente 1027, 1028 Berührungsstellen 1044, 1045 vorhanden, welche die beiden Teilkoppelmittel 1025, 1026 bei einer Kalibrierkraftübertragung zueinander zentrieren.

Wie in Figur 10 gezeigt, können mittels dieser Ausgestaltung das parallelgeführte Teilkoppelmittel 1025 und das feste Teilkoppelmittel 1026 beim Kalibriervorgang zueinander ausgerichtet werden. Dadurch können Verschiebungen orthogonal zu den Mittellängsachsen **X** der Parallelelemente 1027, 1028 verhindert werden. Zwecks der Ausrichtungsfunktion sind am parallelgeführten Teilkoppelmittel 1025 die beiden zweiten Berührungsstellen 1045 in stumpfem Winkel zueinander geneigt ausgebildet.

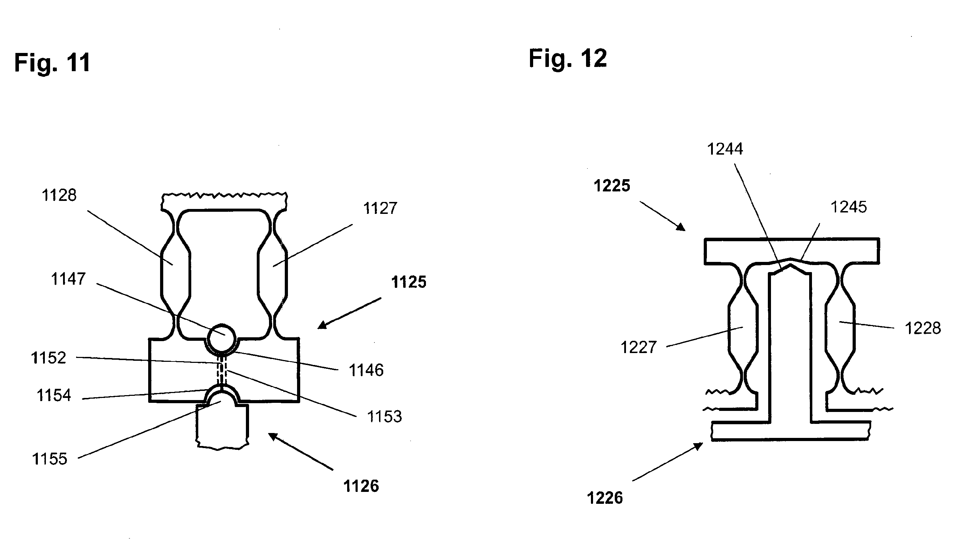

Figur 11 zeigt ein weiteres parallelgeführtes Koppelmittel mit einem parallelgeführten Teilkoppelmittel 1125 und einem festen Teilkoppelmittel 1126. Das parallelgeführte Teilkoppelmittel 1125 weist mittig zwischen den beiden Dünnstellenbiegelager aufweisenden Parallelelementen 1128, 1127 ein als Pfanne wirkendes zweites Zugelement 1147 in Form einer Vertiefung auf. Das feste Teilkoppelmittel 1126 weist ein als Vorsprung wirkendes erstes Zugelement 1146 auf, welches hier kugel- oder stabförmig ausgebildet ist. Das erste Zugelement 1146 ist durch ein Verbindungselement 1152 mit dem festen Teilkoppelmittel 1126 verbunden. Das Verbindungselement 1152 ist dabei beweglich im Inneren des parallelgeführten Teilkoppelmittels 1125 angeordnet. Zur Zentrierung der beiden Zugelemente, kann das parallelgeführte Teilkoppelmittel 1125 auf der dem ersten Zugelement 1146 entgegenliegenden Seite der Durchführung 1153 eine Vertiefung 1154 aufweisen, in welche ein am festen Teilkoppelmittel 1126 ausgebildeter Vorsprung 1155 eingreifen kann.

Auch das in Figur 9 gezeigte zweite Zugelement kann zumindest teilweise jeweils in dem das erste Zugelement aufweisenden Teilkoppelmittel angeordnet sein, wie es für das zweite Zugelement der Figur 11 beschrieben ist.

Figur 12 zeigt ein weiteres parallelgeführtes Koppelmittel mit welchem eine Druckkraft übertragen werden kann. Das parallelgeführte Koppelmittel weist ein zweites, festes Teilkoppelmittel 1226 und ein erstes, parallelgeführtes Teilkoppelmittel 1225 auf. Das feste Teilkoppelmittel 1226 weist eine Art vorstehenden Stempel auf, an dessen freiem Ende eine Berührungsstelle 1244 ausgebildet ist. Dieser ist zwischen den beiden Parallelelementen 1227, 1228 des parallelgeführten Teilkoppelmittels 1225 angeordnet. Die Berührungsstelle 1244 kann zur Kraftübertragung mit einer am parallelgeführten Teilkoppelmittel 1225 angeordneten Berührungsstelle 1245 in Kontakt gebracht werden kann.

Das erste und das zweite Parallelelement können neben der in Figur 9 bis 12 gezeigten Ausgestaltung als Blattfedern oder Dünnstellenbiegelager auch andere dem Fachmann bekannte Ausführungen aufweisen, welche eine gewisse Eigensteifigkeit aufweisen oder deren Schwenkwinkel begrenzt ist. Diese Eigenschaft der Parallelelemente ist für die gezeigten stehenden Lagerstellen vorteilhaft, vor allem in der Ausgestaltung als Dünnstellenbiegelager.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen der Erfindung denkbar, bei welchen beispielsweise mehrere Kalibriergewichte vorhanden sind, welche in der erfindungsgemässen Weise mittels parallelgeführter und/oder unidirektionaler Koppelmittel unabhängig voneinander in ein Hebelwerk eingekoppelt werden können. Dadurch ist beispielsweise der Wägebereich einer Waage nahezu beliebig erweiterbar. Selbstverständlich sind auch in zwei oder mehrere Segmente geteilte Koppelmittel, Kalibrierungshebel und Kalibriergewichte möglich, die unabhängig voneinander betätigt werden können. Auch sind Ausführungen möglich, bei welchen der Kalibrierungshebel und das Kalibriergewicht monolithisch ausgebildet sind.

Weitere Vorteile der erfindungsgemässen Vorrichtung sind dadurch gegeben, dass mittels der Variierung der Kalibrierungshebelarmlängen unterschiedliche Lastbereiche mit denselben Teilen abdeckbar sind, wenn das Kalibriergewicht entlang des Kalibrierungshebelarms an vom Drehpunkt des Kalibrierungshebels verschieden beabstandeten Stellen montiert werden kann. Gegebenenfalls kann auch eine Justierschraube zwischen dem Kalibriergewicht und dem Kalibrierungshebel angeordnet sein, welche der genauen Einstellung des Abstandes zwischen dem Kalibriergewicht und dem Drehpunkt des Kalibrierungshebels dient. Dadurch ist die Einstellbarkeit der Kalibrierungskraft durch genaues Verschieben des Gewichtes möglich, so dass mehrere Kalibriervorrichtungen trotz durch Fertigungstoleranzen und inhomogener Materialien verursachten Abweichungen dieselbe Kalibrierungskraft aufweisen.

**Bezugszeichenliste**

| | |
|---|---|
| 600, 500, 400, 300, 200, 100 | Wägezelle |
| 610, 510, 410, 310, 210, 110 | Kraftübertragungsvorrichtung |
| 11 | feststehender Bereich |
| 12 | Lastaufnahmebereich |
| 613, 513, 413, 313, 213, 113 | Gelenkstelle |
| 14 | erster Parallellenker |
| 15 | zweiter Parallellenker |
| 16 | Hebel |
| 17 | kurzer Hebelarm |
| 18 | langer Hebelarm |
| 19 | erstes Koppelelement |
| 820, 720, 620, 520, 420, 320, 220 | Kalibrierungshebel |
| 621, 221, 121 | erster Kalibrierungshebelarm |
| 622, 222, 122 | zweiter Kalibrierungshebelarm |
| 23 | Kalibriergewicht |
| 624, 524, 424, 324, 224 ,124 | Koppelmittel |
| 1225, 1125, 1025, 925, 825, 725, 625, 425, 325, 225, 125 | erstes Teilkoppelmittel |
| 1226, 1126, 1026, 926, 826, 726, 626, 426,326,226,126 | zweites Teilkoppelmittel |
| 1227, 1127, 1027, 927 | erstes Parallelelement |
| 1228, 1128, 1028, 928 | zweites Parallelelement |
| 529 | drittes Koppelelement |
| 30 | Messaufnehmer |
| 31 | Spule |
| 32 | Magnetsystem |
| 33 | Positionsgeber |
| 434, 334 | Koppelelement |
| 535, 435, 335 | Durchbruch |
| 536, 436, 336 | erster Hebel |
| 537, 437, 337 | zweiter Hebel |
| 538 | dritter Hebel |
| 539 | zweites Koppelelement |
| 40 | Lastaufnehmer |
| 843, 743 | Vorsprung |
| 1244, 1044 | erste Berührungsstelle |
| 1245, 1045 | zweite Berührungsstelle |

| 1146, 946, 746 | erstes Zugelement |
|---|---|
| 1147, 947, 747 | zweites Zugelement |
| 749 | Pfanne |
| 50 | Kalibriergewichts-Auflegevorrichtung |
| 51 | Kurvenscheibe |
| 1152 | Verbindungselement |
| 1153 | Durchführung |
| 1155 | Vorsprung |
| 460 | Lagerstelle |
| 461 | Lagerstelle |
| 864, 764 | 1. Dünnstellenbiegelager |
| 865, 765 | 2. Dünnstellenbiegelager |
| 866 | Fläche / Berührungsstelle |
| 867 | Auflagefläche / Berührungsstelle |

**Patentansprüche**

1. Kraftübertragungsvorrichtung (110, 210, 310, 410, 510, 610) eines gravimetrischen Messinstruments mit einem feststehenden Bereich (11) und mit einem Lastaufnahmebereich (12), welcher Lastaufnahmebereich (12) direkt oder durch mindestens ein Koppelelement (19) und mindestens einen Hebel (16, 336, 436, 536) kraftübertragend mit einem am feststehenden Bereich (11) angeordneten Messaufnehmer (30) verbunden ist, wobei die Kraftübertragungsvorrichtung (110, 210, 310, 410, 510, 610) ein Koppelmittel (124, 224, 324, 424, 524, 624) und einen Kalibrierungshebel (220, 320, 420, 520, 620) mit einer Gelenkstelle (113, 213, 313, 413, 513, 613), einem ersten Kalibrierungshebelarm (121, 221, 621) und einem zweiten Kalibrierungshebelarm (122, 222, 622) aufweist, wobei der erste Kalibrierungshebelarm (121, 221, 621) mit einem Kalibriergewicht (23) fest verbunden ist, wobei das Koppelmittel (124, 224, 324, 424, 524, 624) in ein erstes Teilkoppelmittel (125, 225, 325, 425, 525, 625) und in ein zweites Teilkoppelmittel (126, 226, 326, 426, 526, 626) zweigeteilt ist, wobei zwischen dem ersten und zweiten Teilkoppelmittel (125, 225, 325, 425, 525, 625; 126, 226, 326, 426, 526, 626) nur eine Druckkraft oder nur eine Zugkraft übertragbar ist, **dadurch gekennzeichnet, dass** das Koppelmittel (124, 224, 324, 424, 524, 624) zwischen dem Kalibrierungshebel (220, 320, 420, 520, 620) und dem mindestens einen Hebel (16) angeordnet ist und dass die Gelenkstelle (113, 213, 313, 413, 513, 613) am Lastaufnahmebereich (12) abgestützt ist.

2. Kraftübertragungsvorrichtung nach Anspruch 1, **dadurch gekennzeichnet, dass** das Koppelmittel ein parallelgeführtes Koppelmittel (924, 1024, 1124, 1224) ist, wobei das erste Teilkoppelmittel (925, 1025, 1125, 1225) ein erstes und ein zweites Parallelelement (927, 1027, 1127, 1227; 928, 1028, 1128, 1228) aufweist, welche parallel zueinander angeordnet sind, so dass bei der Kraftübertragung durch das Koppelmittel (924, 1024, 1124, 1224) auftretende relative Querverschiebungen durch das erste und das zweite Parallelelement (927, 1027, 1127, 1227; 928, 1028, 1128, 1228) ausgeglichen werden.

3. Kraftübertragungsvorrichtung nach Anspruch 1, **dadurch gekennzeichnet, dass** das Koppelmittel ein unidirektionales Koppelmittel (224, 324, 624, 724, 824) ist, wobei das erste Teilkoppelmittel (225, 325, 625, 725, 825) ein erstes Dünnstellenbiegelager und das zweite Teilkoppelmittel (226, 326, 626, 726, 826) ein zweites Dünnstellenbiegelager umfasst.

4. Kraftübertragungsvorrichtung nach einem der Ansprüche 1 bis 3, **dadurch gekennzeichnet, dass** das erste Teilkoppelmittel (125, 325, 825, 1025, 1225) und das zweite Teilkoppelmittel (126, 326, 826, 1026, 1226) zur Übertragung von Druckkräften jeweils mindestens eine Berührungsstelle (1044, 1244; 1045, 1245; 866; 867) aufweisen, welche gegeneinander ausgerichtet sind.

5. Kraftübertragungsvorrichtung nach einem der Ansprüche 1 bis 3, **dadurch gekennzeichnet, dass** eines der beiden Teilkoppelmittel (725, 925, 1125; 726, 926, 1126) ein erstes Zugelement (746, 946, 1146) mit einem Vorsprung aufweist und das andere Teilkoppelmittel (725, 925, 1125; 726, 926, 1126) ein zweites Zugelement (747, 947, 1147) mit einer Pfanne aufweist, wobei das erste Zugelement (746, 946, 1146) und das zweite Zugelement (747, 947, 1147) ineinander greifen, der Vorsprung zur Pfanne ausgerichtet ist und bei Übertragung von Zugkräften der Vorsprung mit der Pfanne in Anlage ist.

**6.** Kraftübertragungsvorrichtung nach einem der Ansprüche 1 bis 5, **dadurch gekennzeichnet, dass** in deren Betriebsstellung der Lastaufnahmebereich (12) mittels mindestens eines oberen Parallellenkers (14) und mittels mindestens eines unteren Parallellenkers (15) am feststehenden Bereich (11) in vertikaler Richtung geführt ist.

**7.** Kraftübertragungsvorrichtung nach einem der Ansprüche 1 bis 6, **dadurch gekennzeichnet, dass** das Kalibriergewicht (23) an einer Kalibriergewichts-Auflegevorrichtung (50) angekoppelt ist, welche einen Antrieb umfasst und das Ein- und Auskoppeln des Kalibriergewichts (23) in das Hebelwerk der Kraftübertragungsvorrichtung (110, 210, 310, 410, 510, 610) bewirkt.

**8.** Kraftübertragungsvorrichtung nach Anspruch 7, **dadurch gekennzeichnet, dass** die Kalibriergewichts-Auflegevorrichtung (50) am Lastaufnahmebereich (12) angeordnet ist.

**9.** Kraftübertragungsvorrichtung nach Anspruch 7 oder 8, **dadurch gekennzeichnet, dass** die Stromversorgung der Kalibriergewichts-Auflegevorrichtung und/oder die Übertragung von elektrischen Signalen zur Kalibriergewichts-Auflegevorrichtung über die Parallelführung der Kraftübertragungsvorrichtung erfolgt.

**10.** Kraftübertragungsvorrichtung nach einem der Ansprüche 7 bis 9, **dadurch gekennzeichnet, dass** diese dünne Drähten umfasst, mit welchen Strom und/oder elektrischen Signale vom feststehenden Bereich auf den Lastaufrrahmebereich übertragen werden, wobei die Drähte so dünn ausgeführt sind, dass diese die Funktion der Kraftübertragungsvorrichtung nicht behindern.

**11.** Kraftübertragungsvorrichtung nach einem der Ansprüche 7 bis 10, **dadurch gekennzeichnet, dass** der Antrieb der Kalibriergewichts-Auflegevorrichtung (50) einen selbsthemmenden Exzenter (51) umfasst.

**12.** Kraftübertragungsvorrichtung nach einem der Ansprüche 1 bis 11, **dadurch gekennzeichnet, dass** mindestens der Lastaufnahmebereich, der feststehende Bereich, der Kalibrierungshebel und das Koppelmittel zusammen monolithisch ausgebildet sind.

**13.** Gravimetrisches Messinstrument mit einem Messaufnehmer, mit einem Kalibriergewicht (23) und mit einer Kraftübertragungsvorrichtung (110, 210, 310, 410, 510, 610) nach einem der Ansprüche 1 bis 12.

**14.** Gravimetrisches Messinstrument nach Anspruch 13, **dadurch gekennzeichnet, dass** die Gewichtskraft des Kalibriergewichts (23) durch die Kraftübertragungsvorrichtung (110, 210, 310, 410, 510, 610) in derselben Richtung wie eine auf den Lastaufnahmebereich (12) wirkende Kraft auf den Messaufnehmer (30) übertragbar ist.

**15.** Gravimetrisches Messinstrument nach Anspruch 13 oder 14, **dadurch gekennzeichnet, dass** das Kalibriergewicht (23) aus demselben Material wie die Kraftübertragungsvorrichtung (110, 210, 310, 410, 510, 610) gefertigt ist, und dass zur Kompensation des Dichteeinflusses eine Ergänzungsmasse mit dem Kalibriergewicht (23) verbunden ist und/oder ein Drucksensor zur Erfassung des Umgebungsdrucks des gravimetrischen Messinstruments vorhanden ist.

## Claims

**1.** Force-transmitting mechanism (110, 210, 310, 410, 510, 610) of a gravimetric measuring instrument, comprising a stationary portion (11) and a load-receiving portion (12), wherein the load-receiving portion (12) is joined through a force-transmitting connection, either directly or by way of at least one coupling element (19) and at least one lever (16, 336, 436, 636), to a measurement transducer (30) which is arranged on the stationary portion (11), wherein the force-transmitting mechanism (110, 210, 310, 410, 510, 610) comprises a coupling means (124, 224, 324, 424, 524, 624) and a calibration lever (220, 320, 420, 520, 620) with a fulcrum (113, 213, 313, 413, 513, 613), a first calibration lever arm (121, 221, 621) and a second calibration lever arm (122, 222, 622), wherein the first calibration lever arm (121, 221, 621) is rigidly connected to a calibration weight (23), wherein further the coupling means (124, 224, 324, 424, 524, 624) is divided into a first coupling part (125, 225, 325, 425, 525, 625) and a second coupling part (126, 226, 326, 426, 526, 626), wherein further either only a tractive force or only a compressive force can be transmitted between the first coupling part (125, 225, 325, 425, 525, 625) and the second coupling part (126, 226, 326, 426, 526, 626), **characterized in that** the coupling means (124, 224, 324, 424, 524, 624) is arranged between the calibration lever (220, 320, 420, 520, 620) and the at least one lever (16) and that the fulcrum (113, 213, 313, 413, 513, 613) is supported on the load-receiving portion (12).

**2.** Force-transmitting mechanism according to claim 1, **characterized in that** the coupling means is a parallelguided coupling means (924, 1024, 1124, 1224) whose first coupling part (925, 1025, 1125, 1225) comprises a first and a second parallel element (927, 1027, 1127, 1227; 928, 1028, 1128, 1228) which are arranged parallel to each other, so that relative transverse movements which occur in the transmission of a force through the coupling means (924, 1024, 1124, 1224) are absorbed by the first and second parallel elements (927, 1027, 1127, 1227; 928, 1028, 1128, 1228).

**3.** Force-transmitting mechanism according to claim 1, **characterized in that** the coupling means is a unidirectional coupling means (224, 324, 624, 724, 824) whose first coupling part (225, 325, 625, 725, 825) comprises a first flexure pivot and whose second coupling part (226, 326, 626, 726, 826) comprises a second flexure pivot.

**4.** Force-transmitting mechanism according to one of the claims 1 to 3, **characterized in that** the first coupling part (125, 325, 825, 1025, 1225) and the second coupling part (126, 326, 826, 1026, 1226) each have at least one contact location (1044, 1244; 1045, 1245; 866; 867) for the transmission of compressive forces, with the respective contact locations of the first and the second coupling part facing each other.

**5.** Force-transmitting mechanism according to one of the claims 1 to 3, **characterized in that** one of the two coupling parts (725, 925, 1125; 726, 926, 1126) comprises a first traction element (746, 946, 1146) with a projection, while the other coupling part (725, 925, 1125; 726, 926, 1126) includes a second traction element (747, 947, 1147) with a concave bearing, wherein the first traction element (746, 946, 1146) and the second traction element (747, 947, 1147) reach into each other and, when tractive forces are being transmitted, the projection is in contact with the concave bearing.

**6.** Force-transmitting mechanism according to one of the claims 1 to 5, **characterized in that** in the operating position of the force-transmitting mechanism the load-receiving portion (12) is tied to the stationary portion (11) for guided vertical movement by means of at least one upper parallel guide (14) and by means of at least one lower parallel guide (15).

**7.** Force-transmitting mechanism according to one of the claims 1 to 6, **characterized in that** the calibration weight (23) is coupled to a calibration weight loading device (50) which comprises a drive source and which causes the calibration weight (23) to be coupled to, and uncoupled from, the lever system of the force-transmitting mechanism (110, 210, 310, 410, 510, 610).

**8.** Force-transmitting mechanism according to claim 7, **characterized in that** the calibration weight loading device (50) is arranged on the load-receiving portion (12).

**9.** Force-transmitting mechanism according to claim 7 or 8, **characterized in that** current is supplied and/or electrical signals are transmitted to the calibration weight loading device (50) through the parallel guides of the force-transmitting mechanism.

**10.** Force-transmitting mechanism according to one of the claims 7 to 9, **characterized in that** the force-transmitting mechanism comprises thin wires through which current and/or electrical signals are transmitted from the stationary portion to the load-receiving portion, wherein said wires are designed to be sufficiently thin so as not to impede the function of the force-transmitting mechanism.

**11.** Force-transmitting mechanism according to one of the claims 7 to 10, **characterized in that** the drive source of the calibration weight loading device includes a self-stopping eccentric (51).

**12.** Force-transmitting mechanism according to one of the claims 1 to 11, **characterized in that** at least the load-receiving portion, the stationary portion, the calibration lever and the coupling means are formed as a monolithically connected unit.

**13.** Gravimetric measuring instrument with a load receiver, with a calibration weight (23), and with a force-transmitting mechanism (110, 210, 310, 410, 510, 610) according to one of the claims 1 to 12.

**14.** Gravimetric measuring instrument according to claim 13, **characterized in that** the weight force of the calibration weight (23) can be transmitted by the force-transmitting mechanism (110, 210, 310, 410, 510, 610) so that said weight force will act on the measurement transducer (30) in the same direction as a force applied to the load-receiving portion (12).

**15.** Gravimetric measuring instrument according to claim 13 or 14, **characterized in that** the calibration weight (23) is made of the same material as the force-transmitting mechanism (110, 210, 310, 410, 510, 610) and that a supplementary mass is connected to the calibration weight (23) to compensate for the influence of density, and/or a pressure sensor is provided for the measurement of the ambient barometric pressure of the gravimetric measuring instrument.

**Revendications**

**1.** Dispositif de transmission de force (110, 210, 310, 410, 510, 610) d'un instrument de mesure gravimétrique, avec une région fixe (11) et avec une région de réception de charges (12), ladite région de réception de charges (12) étant reliée, directement ou par le biais d'au moins un élément d'accouplement (19) et d'au moins un levier (16, 336, 436, 536), de façon à transmettre des forces, à un capteur de mesure (30) agencé sur la région fixe (11), dans lequel le dispositif de transmission de force (110, 210, 310, 410, 510, 610) comporte un moyen d'accouplement (124, 224, 324, 424, 524, 624) et un levier de calibrage (220, 320, 420, 520, 620) avec un point d'articulation (113, 213, 313, 413, 513, 613), un premier bras de levier de calibrage (121, 221, 621) et un deuxième bras de levier de calibrage (122, 222, 622), dans lequel le premier bras de levier de calibrage (121, 221, 621) est relié fixement à un poids de calibrage (23), dans lequel le moyen d'accouplement (124, 224, 324, 424, 524, 624) est divisé en un premier moyen d'accouplement partiel (125, 225, 325, 425, 525, 625) et un deuxième moyen d'accouplement partiel (126, 226, 326, 426, 526, 626), dans lequel seule une force de pression ou seule une force de traction peut être transmise entre le premier et le deuxième moyen d'accouplement partiel (125, 225, 325, 425, 525, 625; 126, 226, 326, 426, 526, 626), **caractérisé en ce que** le moyen d'accouplement (124, 224, 324, 424, 524, 624) est agencé entre le levier de calibrage (220, 320, 420, 520, 620) et l' au moins un levier (16), et **en ce que** le point d'articulation (113, 213, 313, 413, 513, 613) s'appuie sur la région de réception de charges (12).

**2.** Dispositif de transmission de force selon la revendication 1, **caractérisé en ce que** le moyen d'accouplement est un moyen d'accouplement (924, 1024, 1124, 1224) guidé parallèlement, dans lequel le premier moyen d'accouplement partiel (925, 1025, 1125, 1225) comporte un premier et un deuxième élément parallèle (927, 1027, 1127, 1227; 928, 1028, 1128, 1228) agencés parallèlement entre eux, de telle sorte que les déplacements transversaux relatifs apparaissant lors de la transmission de force par le moyen d'accouplement (924, 1024, 1124, 1224) sont compensés par les premier et le deuxième éléments parallèles (927, 1027, 1127, 1227; 928, 1028, 1128, 1228).

**3.** Dispositif de transmission de force selon la revendication 1, **caractérisé en ce que** le moyen d'accouplement est un moyen d'accouplement unidirectionnel (224, 324, 624, 724, 824), dans lequel le premier moyen d'accouplement partiel (225, 325, 625, 725, 825) comprend un premier palier de fléchissement de partie fine et le deuxième moyen d'accouplement partiel (226, 326, 626, 726, 826) comprend un deuxième palier de fléchissement de partie fine.

**4.** Dispositif de transmission de force selon l'une des revendications 1 à 3, **caractérisé en ce que** le premier moyen d'accouplement partiel (125, 325, 825, 1025, 1225) et le deuxième moyen d'accouplement partiel (126, 326, 826, 1026, 1226) comportent chacun au moins un point de contact (1044, 1244; 1045, 1245; 866; 867) orientés les uns vers les autres, pour la transmission de forces de pression.

**5.** Dispositif de transmission de force selon l'une des revendications 1 à 3, **caractérisé en ce que** l'un des deux moyens d'accouplement partiels (725, 925, 1125; 726, 926, 1126) comporte un premier élément de traction (746, 946, 1146) avec une saillie, et l'autre moyen d'accouplement partiel (725, 925, 1125; 726, 926, 1126) comporte un deuxième élément de traction (747, 947, 1147) avec une cuvette, dans lequel le premier élément de traction (746, 946, 1146) et le deuxième élément de traction (747, 947, 1147) s'engagent l'un dans l'autre, la saillie est orientée vers la cuvette et la saillie est en contact avec la cuvette lors de la transmission de forces de traction.

**6.** Dispositif de transmission de force selon l'une des revendications 1 à 5, **caractérisé en ce que** dans sa position de fonctionnement, la région de réception de charges (12) est guidée dans la direction verticale sur la région fixe (11) au moyen d'au moins un guide parallèle supérieur (14) et d'au moins un guide parallèle inférieur (15).

**7.** Dispositif de transmission de force selon l'une des revendications 1 à 6, **caractérisé en ce que** le poids de calibrage (23) est accouplé à un dispositif d'appui de poids de calibrage (50) comprenant un entraînement et provoquant l'accouplement et le désaccouplement du poids de calibrage (23) dans le mécanisme de levier du dispositif de transmission de force (110, 210, 310, 410, 510, 610).

8. Dispositif de transmission de force selon la revendication 7, **caractérisé en ce que** le dispositif d'appui de poids de calibrage (50) est agencé sur la région de réception de charges (12).

9. Dispositif de transmission de force selon la revendication 7 ou 8, **caractérisé en ce que** l'alimentation électrique du dispositif d'appui de poids de calibrage et/ou la transmission de signaux électriques vers le dispositif d'appui de poids de calibrage s'effectuent par la bielle parallèle du dispositif de transmission de force.

10. Dispositif de transmission de force selon l'une des revendications 7 à 9, **caractérisé en ce que** celui-ci comprend des fils de fer fins permettant de transmettre du courant et/ou des signaux électriques de la région fixe vers la région de réception de charges, dans lequel les fils de fer sont conçus suffisamment fins pour ne pas gêner le fonctionnement du dispositif de transmission de force.

11. Dispositif de transmission de force selon l'une des revendications 7 à 10, **caractérisé en ce que** l'entraînement du dispositif d'appui de poids de calibrage (50) comprend un excentrique autobloquant (51).

12. Dispositif de transmission de force selon l'une des revendications 1 à 11, **caractérisé en ce qu'**au moins la région de réception de charges, la région fixe et le moyen d'accouplement sont conçus ensemble en un seul bloc.

13. Instrument de mesure gravimétrique avec un capteur de mesure, avec un poids de calibrage (23) et avec un dispositif de transmission de force (110, 210, 310, 410, 510, 610) selon l'une des revendications 1 à 12.

14. Instrument de mesure gravimétrique selon la revendication 13, **caractérisé en ce que** la force de pesanteur du poids de calibrage (23) peut être transmise au capteur de mesure (30) par le dispositif de transmission de force (110, 210, 310, 410, 510, 610), dans la même direction qu'une force agissant sur la région de réception de charges (12).

15. Instrument de mesure gravimétrique selon la revendication 13 ou 14, **caractérisé en ce que** le poids de calibrage (23) est constitué du même matériau que le dispositif de transmission de force (110, 210, 310, 410, 510, 610), et **en ce que** pour compenser l'influence de la densité, une masse de complément est reliée au poids de calibrage (23) et/ou un capteur de pression est prévu pour la détection de la pression environnante de l'instrument de mesure gravimétrique.

**Fig. 1**

# Fig. 2

EP 2 533 024 B1

**Fig. 3**

EP 2 533 024 B1

# Fig. 4

# Fig. 5

EP 2 533 024 B1

Fig. 6

Fig. 7

Fig. 8

EP 2 533 024 B1

**Fig. 9**

**Fig. 10**

EP 2 533 024 B1

Fig. 12

1228

1245

1244

1225

1227

1226

Fig. 11

1127

1125

1128

1147

1146

1153

1126

1152

1154

1155

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0955530 B1
- CH 661121 A5
- JP 3761792 B
- DE 8108831 U1
- US 2672755 A
- JP 2002277316 A
- EP 101799300 A

- EP 2434264 A1
- EP 09180142 A
- EP 2336736 A1
- US 20080218303 A1
- CH 593481 A5
- EP 1726926 A1